# EUROPEAN PATENT APPLICATION

(11) **EP 3 339 585 A1**
(43) Date of publication of application: **27.06.2018**
(21) Application number: 16206734.2
(22) Date of filing: 23.12.2016
(51) Int. Cl.: F01N 3/04, B01D 53/92

(54) **COMBINATION OF A SHIP INTERNAL COMBUSTION ENGINE AND A CLEANING SYSTEM FOR TREATING IMPURITIES CONTAINED IN EXHAUST GASES OF SHIP INTERNAL COMBUSTION ENGINE**

(71) Applicant: Makarlan Talli Oy, 21500 Piikkiö (FI)
(72) Inventor: Verosaari, Reino, 01400 Vantaa (FI)
(74) Representative: Kolster Oy Ab

(57) **Abstract**

The invention relates to a combination of a ship internal combustion engine (46) and a cleaning system for treating impurities contained in exhaust gases of the ship combustion engine to reduce especially sulphur oxide and nitrogen oxide emissions, the cleaning system comprising an Exhaust Gas Recirculation (EGR) scrubber (1) for washing the exhaust gases; and a purification unit (2) for cleaning wash water (waste water) from the scrubber (1). To allow for efficient reduction of sulphuric oxide and nitrogen oxide emissions and efficient purification of the waste water from the scrubber (1) and obtain the impurities in a highly concentrated and compact form, the purification unit (2) comprises an effluent circuit (3) including at least one membrane filter (4) and comprising a circulation pump (5) for circulating the effluent to be purified in the effluent circuit by feeding the effluent to the membrane filter (4) so that it filters and exits, purified, from the membrane filter and the effluent circuit (3) while a residue containing impurities is discharged from the membrane filter and led back to the circulation pump (5) and the membrane filter for concentrating the residue; and a band filter (121) for further concentrating the residue originating from the effluent circuit (3) to form waste matter in the form of a mushy compact mass.

## Description

### Background of the invention

The invention relates to a combination of a ship internal combustion engine and a cleaning system for treating impurities contained in exhaust gases of the ship internal combustion engine in order to reduce especially sulphur oxide and nitrogen oxide emissions from the exhaust gases of the internal combustion engine, the internal combustion engine being provided with a turbo charger and the cleaning system comprising
- an Exhaust Gas Recirculation (EGR) scrubber for receiving exhaust gases from the internal combustion engine and for washing the exhaust gases, -and
- a purification unit for cleaning wash water to be purified, i.e. effluent, which originates from the Exhaust Gas Recirculation scrubber.

It is widely known to clean exhaust gases from ships' engines by means of exhaust gas scrubbers. The purpose is to reduce sulphur dioxide emissions of the exhaust gases in particular since they are problematic to the environment. Sulphur dioxide emissions occur because engines of a ship use a sulphur-containing fuel, which oxidizes during fuel combustion process in the engine. Low sulphur fuels enable sulphur dioxide emissions to be reduced but the low sulphur fuels are expensive. In order to be able to use fuels whose sulphur content can be relatively high, i.e. higher than that in so-called low sulphur fuels, exhaust gases are scrubbed in exhaust gas scrubbers, enabling sulphur dioxide emissions to be dramatically reduced as compared with not scrubbing the exhaust gases. An exhaust gas scrubbing process produces wash water which contains impurities and which as such cannot be discharged into the sea since the wash water contains a large amount of impurities and, typically, the pH value of the wash water is also too low for it to be allowed to be discharged into the sea. Wash water exiting from the exhaust gas scrubber may be fed back to the exhaust gas scrubber, but the wash water cannot be recirculated "endlessly" in this way since the wash water only becomes more polluted the more exhaust gases are scrubbed therewith..

From WO 2014/048723 A1 is known a combination of the kind mentioned in the first paragraph and comprising a ship internal combustion engine and a cleaning system for treating impurities contained in exhaust gases of the ship internal combustion engine in order to reduce SOₓ (sulphur oxide) and NOₓ (nitrogen oxide) from the exhaust gases of the internal combustion engine and containing a purification unit for cleaning waste water from the scrubber. The cleaning system relies on the use of an Exhaust Gas Recirculation (EGR) scrubber and an Exhaust Gas Cleaning (EGC) scrubber. A problem with this known cleaning system is believed to be that its purification unit does not produce highly concentrated waste from the purified waste water. This is because the purification unit is composed of at least one separator unit for cleaning the waste water, said at last one separator unit being disclosed to preferably be a high speed separator, a partial discharge high speed separator or a total discharge high speed separator. Rotating separators can only separate particles which have a higher density than the fluid from which the particles shall be separated. This means that light particles cannot be separated from the fluid. In this known cleaning system big amounts of sludge is formed. The sludge requires much space on the ship. The disclosed cleaning system is also rather complicated.

### Brief description of the invention

An object of the invention is thus to provide a new combination of a ship internal combustion engine and a cleaning system comprising an Exhaust Gas Recirculation (EGR) scrubber, the cleaning system allowing for i) efficient reduction of sulphuric oxide and nitrogen oxide emissions from the ship engine ii) obtaining the impurities in a highly concentrated and compact form, and iii) efficient purification of waste water from the scrubber.

In order to achieve this, the combination according to the invention is characterized in that in that the purification unit comprises
- an effluent circuit for cleaning the wash water to be purified, i.e. the effluent, originating from the Exhaust Gas Recirculation scrubber, the effluent circuit including at least one membrane filter comprising a semipermeable membrane and a circulation pump for circulating the effluent to be purified in the effluent circuit by feeding the effluent to an inlet end of the membrane filter such that the effluent flowing through the membrane filter filters through the semipermeable member and exits, purified, from an outlet of the membrane filter and the effluent circuit while a residue containing impurities is led from a discharge end of the membrane filter back to the circulation pump and from the circulation pump again to the inlet end of the membrane filter for concentrating the residue, and
- a purification device comprising a band filter comprising a movable filter band for further concentrating the residue originating from the effluent circuit, the purification device being positioned downstream the effluent circuit and the discharge end of the membrane filter.

The impurity concentration of the effluent in the effluent circuit increases the more the more effluent is supplied to the effluent circuit, whereby the pressure difference required for carrying out the purification process increases. Consequently, at least some of the residue in the effluent circuit, highly concentrated with impurities, is - typically at intervals in practice - removed from the effluent circuit, whereby the effluent having a very high impurity concentration is further treated in the purification device. The amount and volume of the latter effluent is only a fraction as compared with the amount of wash water containing impurities and exiting from the exhaust gas scrubber into the purification unit and the amount of effluent purified in the purification unit. The precipitate obtained in the purification device is highly concentrated with impurities. The precipitate is directed to the band filter of the purification device where the precipitate is concentrated into a mushy compact mass which may be placed in a small container which is easy to move from the ship to the shore for disposal. The filter band enables impurities dissolved in the effluent, and microscopically small impurities in a highly concentrated form to be removed from the effluent with no need to use large storage tanks for intermediate storage of the effluent, and a vast majority of the treated wash water, purified as prescribed by regulations, to be pumped into the sea.

In order for any largish solid impurities in the effluent not to collect in or obstruct the semipermeable membrane of the membrane filter, the effluent is preferably filtered by a coarse filter and/or a micro filter prior to supplying the effluent to the effluent circuit.

In order to maintain the purification capability of the membrane filter, the membrane filter is cleaned at intervals after its semipermeable membrane has been filled with impurities. Preferably, the cleaning is carried out by backwashing, whereby the impurities in the semipermeable membrane of the membrane filter are removed. The removed impurities are fed to the purification device to be filtered off by means of its band filter.

Preferably, the filter band is a disposable band but can also be an endless filter band, which can cleaned preferably by spraying water onto a second surface of the filter band opposite to the first surface of the filter band.

Preferably, the purification device comprises means for feeding one or more precipitating agents to the purification device. The term "precipitating agent" refers to a chemical substance used for promoting molecular aggregation of substances present in water into particles. The term "precipitating agent" also refers to a chemical substance used for promoting aggregation of suspended particles present in water into a macroscopic mass (floc), also known as a flocculant.

Preferred embodiments of the combination of the ship internal combustion engine and the cleaning system according to the invention are disclosed in the attached claims.

An advantage of the present invention is that it provides a new combination of a ship internal combustion engine and a cleaning system for reduction of sulphur oxide and nitrogen oxide emissions from the ship internal combustion engine and for efficient concentration of the impurities in a compacted form. The need for space required by the cleaning system is small making it easy to place onboard a ship. By efficient filtering, the purification unit is capable of purifying an aqueous fluid containing impurities originating from the effluent of an exhaust gas scrubber so efficiently that the purified water obtained in the filtration meets even strict requirements set for the purity of the water and can be discharged directly into the sea. Alternatively, the purified water obtained in the filtration may be returned back to the exhaust gas scrubber and recirculated. After filtration, the impurities can be collected, highly concentrated, in which case due to their small volume they are very easy to transfer to the shore for appropriate disposal or final treatment. In the system, one scrubber is sufficient, although a plurality of scrubbers can be used, however, with no relevant or significant advantages.

### Brief description of the figures

The invention, i.e. the combination of a ship internal combustion engine and a cleaning system for treating impurities contained in exhaust gases of the ship internal combustion engine, is now described in closer detail by means of one preferable embodiment and with reference to the accompanying drawing, in which:
Figure 1 illustrates a general lay out of the invention for treating impurities contained in exhaust gases,
Figure 2 illustrates an effluent circuit utilizable in the invention of Figure 1,
Figures 3 and 4 are side and front views, respectively, illustrating a purification device utilizable in the invention of Figure 1,
Figure 5a illustrates a lay out of a system for cleaning SOₓ and NOₓ gases,
Figures 5b to 5d illustrate a preferred embodiment of the invention comprising a system of Figure 5a, and
Figures 5e and 5f show lists of symbols and a legend for instrumentation, respectively explaining symbols and systems found in Figures 5a to 5d.

### Detailed description of the invention

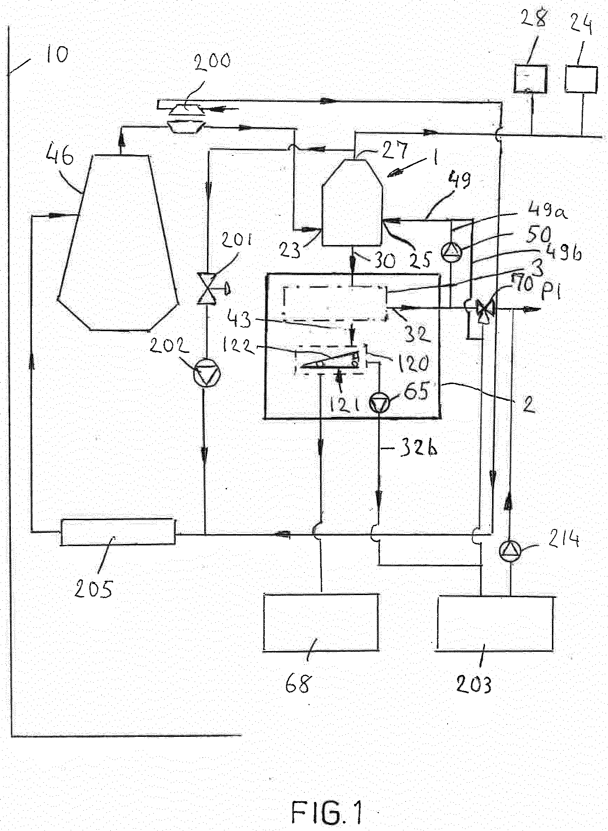

Figure 1 shows a general lay out of the invention. For sake of simplicity a number of components, such as valves, have not been drawn in the figure. Reference numeral 10 designates a ship and reference numeral 46 shows a ship internal combustion engine. Reference numeral 200 indicates a turbo charger, 201 an EGR-valve, and 202 an EGR-blower. Reference numeral 205 designates an air cooler for cooling scavenging air exiting the turbo charger 200 of the internal combustion engine 46 and to be fed thereto. Unpurified exhaust gases of the engine 46_are at point 23 led into the exhaust gas scrubber which is of the type Exhaust Gas Recirculation (EGR) scrubber 1. Water is sprayed onto the exhaust gases from point 25. Preferably, the water is basic, but neutral water may also be used. The number and location of spraying points 25 may vary. The purified exhaust gases exit from the exhaust gas scrubber 1 at point 27. A measuring device 28 is used for determining the sulphur dioxide concentration (SO₂ concentration) of the exhaust gases exiting from the exhaust gas scrubber 1. A measuring device 24 is used for determining the carbon dioxide concentration (CO₂ concentration) of purified exhaust gases in percent by volume exiting the exhaust gas scrubber 1. When scrubbing the exhaust gases, a ratio of SO₂/CO₂ is measured, where SO₂ is the sulphur dioxide concentration in ppm in flue gas after flue gas purification and CO₂ is the carbon dioxide concentration in percent by volume in the flue gas. By adjusting the amount of water supplied to the exhaust gas scrubber 1, the operation of the exhaust gas scrubber is adjusted so that ratio SO₂(in ppm)/CO₂(in %vv) is in required value of 4.3 or less, in SOₓ Emission Control Areas, and from beginning of year 2020 ratio should be 21.7 or less worldwide, outside of SECA. The scrubbing of exhaust gases in an exhaust gas scrubber 1 being known, the procedure of carrying out the scrubbing is not explained in closer detail herein.

When scrubbing exhaust gases, both solid impurities and impurities dissolved in water collect in the wash water forming dirty wash water, or effluent. The hot wash water containing impurities (the hot effluent) and discharged via line 30 at the bottom of the exhaust gas scrubber 1 is cooled down before it enters the purification unit 2 for purifying the wash water.

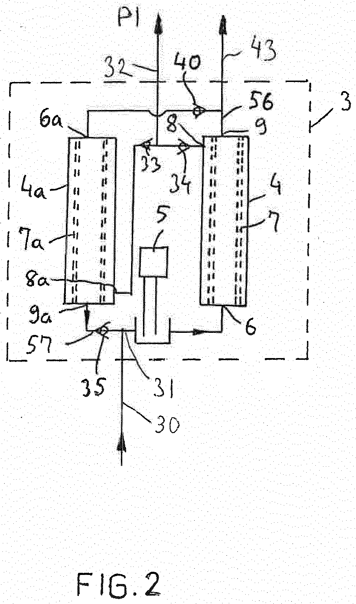

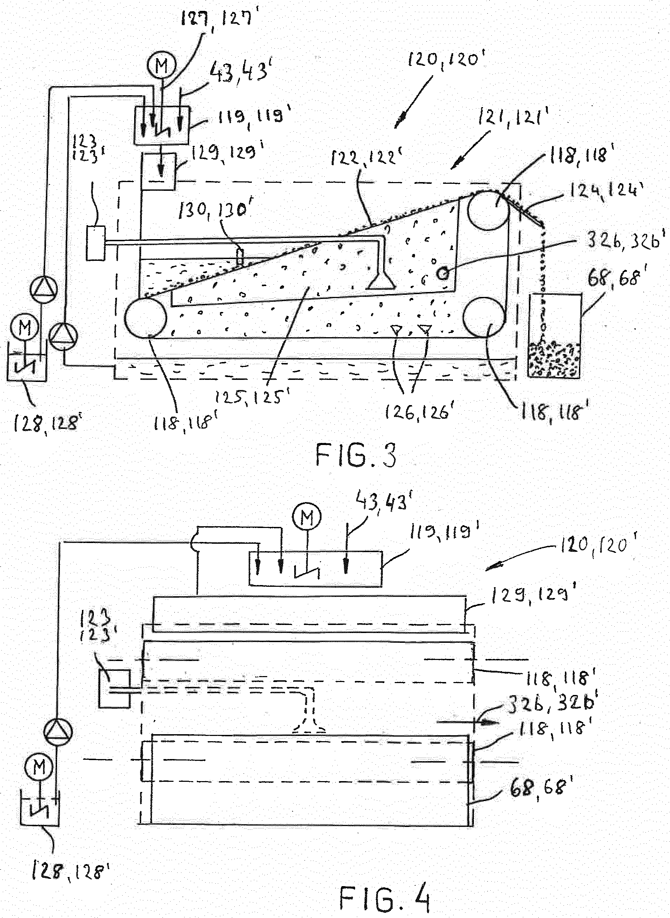

The purification unit 2 comprises an effluent circuit 3 and purification device 120. The wash water is first purified in the effluent circuit 3 and subsequently in the purification device 120 which is located downstream the effluent circuit. The effluent circuit 3 comprises at least one membrane filter. Wash water purified in the effluent circuit 3 is via line 32 discharged at P1 from the effluent circuit 3. The purified wash water can be discharged from point P1 to the sea. The purified wash water can also via lines 49a, 49 be directed back to the exhaust gas scrubber 1 for being used as wash water in the scrubber. Reference numeral 50 designates a pump for pumping the purified wash water to the scrubber 1. A residue having a high concentration of impurities is directed via line 43 from the effluent circuit 3 to the purification device 120. The purification device 120 comprises a band filter 121 comprising a movable filter band 122. In the purification device 120 the residue is dewatered and further concentrated. The waste matter formed on the filter band 122 is lead as a mushy mass to a waste matter receptacle 68. Reference numeral 203 indicates a storage tank for receiving filtrate from the purification device 120. Reference numeral 65 designates a pump for pumping filtrate from the purification device 120 via line 32b to the storage tank 203. Alternatively, the storage tank 203 for receiving purified water can receive filtrate from the effluent circuit 3 via valve 70. Reference numeral 214 is a pump for pumping purified water from the storage tank 203 to the discharge point P1. The construction and functioning of the effluent circuit 3 and the purification device 120 are explained in more detail with reference to Figures 2 and, respectively Figures 3 and 4.

Figure 2 shows in more detail the effluent circuit 3 of Figure 1. Effluent is lead via line 30 to the effluent circuit 3 is designated 30. The effluent circuit 3 comprises at least one membrane filter 4 (Figure 2 shows membrane filters 4 and 4a) and a circulation pump 5 for circulating the wash water to be purified so that it filters through the membrane filter 4 (also through filter 4a) and exits, purified, from the effluent circuit 3. Reference numeral 31 designates the inlet to the circulation pump 5. The filter 4 comprises a semipermeable membrane 7, the circulation pump 5 being arranged to circulate the water to be purified by feeding the water to an inlet end 6 of the membrane filter 4 such that the water flowing through the membrane filter filters through the semipermeable membrane 7 and exits purified from an outlet 8 of the membrane filter 4 and from the effluent circuit 3 while a residue containing impurities is led from a discharge end 9 of the membrane filter back to the circulation pump 5 and from the circulation pump again to the inlet end 6 of the membrane filter. Thus, a residue containing impurities is kept in circulation in the effluent circuit 3 in order to concentrate it to include more impurities. Concentrated residue is at times discharged via line 43 from the effluent circuit 3 (to the purification device 120, c.f. Figure 1). Reference numbers 33 to 35 and 40 designate return valves, which ensure that the fluid is not allowed to circulate in a wrong direction as far as the operation of the purification apparatus is concerned.

The purified water exiting from the effluent circuit 3 at exit or discharge point P1 is so clean that it complies even with very strict requirements set for the purity of the water, and can be discharged into the sea (or to the scrubber, see Figure 1).

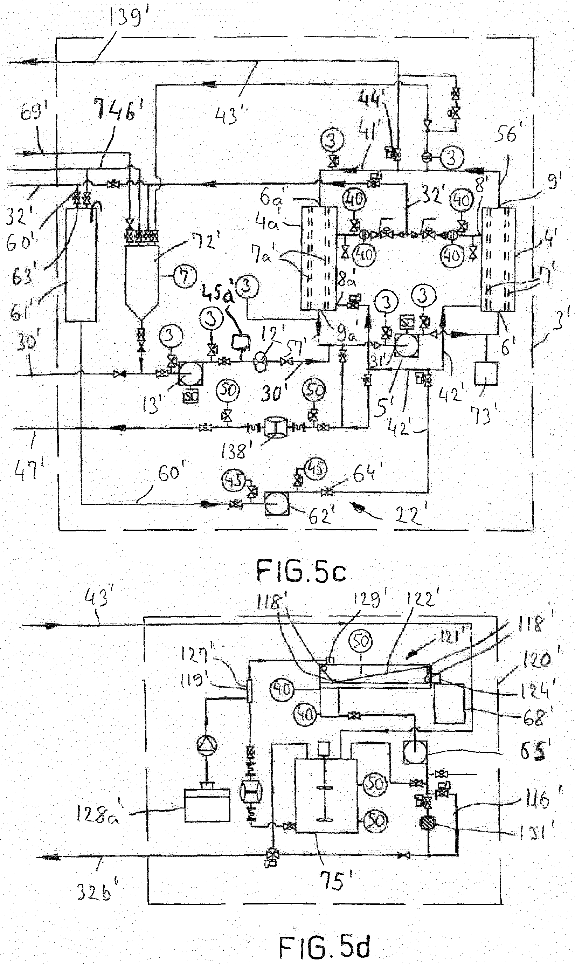

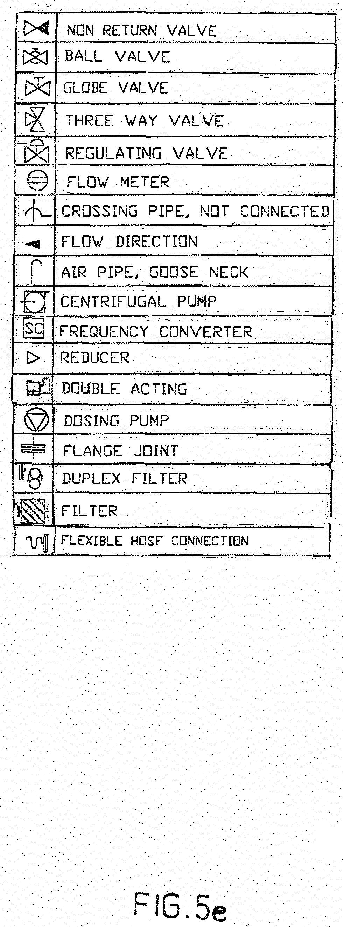

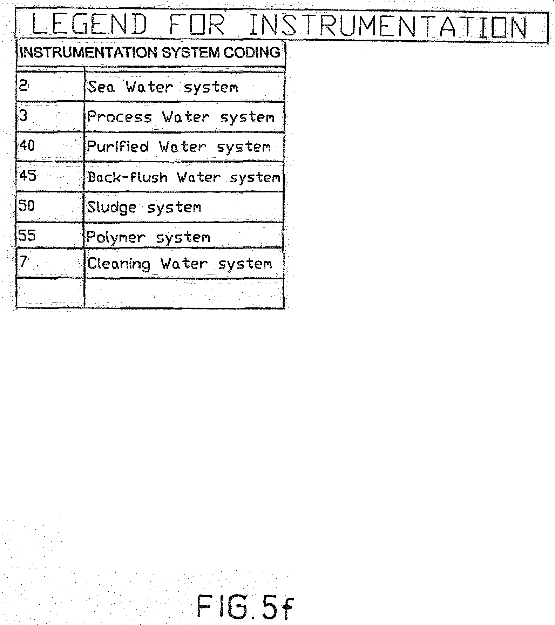

The structure and operation of the effluent circuit is explained in even more detail in connection with the embodiment of Figure 5c. For sake of simplicity e.g. a backwashing arrangement is not explained in connection with Figure 2, but is explained and shown in Figure 5c.

Figures 3 and 4 are side and front views, respectively, illustrating in more detail the purification device 120 shown in Figure 1. The purification device 120 comprises a band filter 121 which comprises a moving (movable) inclined filter band 122. The width of the filter band 122 is about 1000 mm. The filter band 122 comprises a porous stainless steel wire mesh band. The pore size of the filter band 122 is roughly within a range of 30 to 120 µm, more preferably within a range of 30 to 100 µm, and most preferably within a range of 30 to 80 µm. The filter band 122 is endless and controlled by three rolls 118. The number of rolls 118 for supporting the filter band may vary. The filter band 122, which is sealed at its edges, defines a space 125 for receiving the filtrate purified of impurities, i.e. purified water. The sealing is achieved by means of sides (not shown) of the purification device 120, the sides being perpendicular to the transverse direction of the filter band 122. Underpressure may be arranged in the space 125 by underpressure means 123 in order to arrange underpressure in the inclined portion of the filter band 122, on the clean side of the filter band. The underpressure means 123 may be a suction device since the underpressure does not have to be great. Reference number 126 designates spraying devices for cleaning the filter band while reference number 124 designates a scraper for removing precipitate from a first surface (upper surface) of the filter band 122 after most of the precipitate has been removed by the scraper 124. Simultaneously with spraying water by the spraying means 126, it is possible to use mechanical brushing to enhance the removal of residual impurities still remaining after scraping from the filter band 122. Preferably, an aluminium- and/or iron-based salt or salts, such as aluminium chloride, aluminium chlorine hydrate or polyamine chloride, aluminium sulphate, ferric chloride sulphate and/or ferrous sulphate, may be used as a precipitating agent according to the invention. Alternatively, anionic and/or cationic polymers, particularly cationic polyamines, polyacrylamide, copolymers of acrylamide or anionic copolymers of alkyl amide, may as such or together with an aluminium- and/or iron-based salt or salts be used as a precipitating agent according to the invention. The precipitating agent may be used as an aqueous polymer solution, for instance. An appropriate or the most appropriate precipitating agent can be found through experimenting. It is not very laborious to find an appropriate precipitating agent. Reference numerals 32b and 32b' designate the exit line for filtrate exiting from the purification device 120. The filtrate can be discharged into the sea at P1, see Figure 1, or conveyed via line 49b, see Figure 1, to the exhaust gas scrubber 1.

In the following, the operation of the purification device 120 will be explained.

The residue from the effluent circuit 3 is further concentrated in the purification device 120. The residue as well as a precipitating agent are fed to a mixing vessel 119. Consequently, the purification device 120 also includes feeding means for feeding the precipitating agent to the band filter 121. The volume of the mixing vessel 119 is 30 to 1000 L. The precipitating agent is mixed by means of a motor-driven mixer 127 in the mixing vessel 119 for a couple of minutes, e.g. 3 to 5 min. The precipitating agent may be fed as a finished solution to the mixing vessel 119. The solution may be prepared in a vessel 128 in which a precipitating agent in powder form is mixed with clean water, after which the solution is pumped to the mixing vessel 119. The precipitating agent makes the impurities in the effluent agglomerate and flocculate. A mixture of the effluent to be purified and the precipitating agent is fed via a valve (not shown) from the mixing vessel 119 to a spreading box 129 from which the mixture is spread onto the inclined portion of the upper surface of the filter band 122, substantially over the entire width of the filter band. Consequently, the width of the spreading box 129 substantially corresponds with the width of the filter band 122. The mixture is allowed to filter on the filter band 122 so that the impurities in the mixture concentrate onto the upper surface of the filter band as a precipitate which is easy to remove by the scraper 124 which with a small pressure presses against the upper surface of the filter band, and a filtrate free of impurities passes through the filter band into the space 125 from which it is via line 32b removed to the storage tank 203 (see Fig.1) for purified water. In order to quicken and enhance the operation of the purification device 120, the filter band 122 is by the underpressure means 123 subjected to underpressure such that on its second inclined surface, i.e. the clean inclined surface, which is opposite to its first inclined surface, the pressure is lower than on the first inclined surface. Underpressure is arranged in the space 125 into which the filtrate passes. The magnitude of the underpressure is e.g. 0.2 to 0.4 bar. Owing to the underpressure, the water content in the precipitate drops quickly before the precipitate moves to a point where it is scraped off and led to the waste matter receptacle 68. The precipitate or waste matter removed from the filter band 122 resembles a thick mushy mass and it is highly concentrated, containing a large amount of impurities and only little water. The volume of the waste matter receptacle 68 is small, and it is easy to transfer from the ship to the shore for further treatment of its contents. The filtrate free of impurities is led via line 32b to the storage tank for purified water, or to the sea (cf. storage tank 203 and point P1, respectively, in Figure 1). When desired, a portion, typically a small portion, of the filtrate may be led to the exhaust gas scrubber or to the effluent circuit.

Since it is impossible to get all the precipitate removed from the filter band 122 by the scraper 124, the purification device 120 comprises spraying devices 126 for spraying water to the clean side of the filter band 122, enabling the residual impurities on the first, i.e. dirty, side of the filter band to be removed. The spraying devices 126 are arranged in the space 125. The removed impurities may together with one or more precipitating agents be led back to the inclined filter band 122 of the purification device 120 to be removed by the scraper 124. In practice, the impurities are led to the mixing vessel 119 and via the spreading box 129 to the filter band 122.

Typically, the filter band 122 of the purification device 120 moves intermittently, in which case its rate of movement is about 0.1 to 0.4 m/min. In Figure 3, the effluent to be purified resides at a height which covers only a small portion of the length of the inclined filter band 122. When more effluent to be purified is fed from the spreading box 129 onto the stationary (not moving) inclined filter band 122, the height of the effluent rises so that the effluent to be purified covers more and more of the length of the inclined filter band 122. When the height of the effluent rises to a certain level, a float 130 starts a motor (not shown) which starts the endless filter band moving. In such a case, material containing a lot of impurities and to be scraped off moves towards the scraper 124 while at the same time a purified filter band moves to the lowest point of the inclined filter band 122, i.e. above the roll 118 to the left, through which the water contained in the effluent is easily filtered since the filter band is cleaned and unclogged. As a result of the quick permeation of the water, the height of the effluent on the inclined filter band 122 drops enough for the float 130 to stop the movement of the filter band 122. Only after the height of the effluent collected on the upper surface of the inclined filter band 122 has risen sufficiently high does the float 130 start the motor again and the mushy precipitate continues to move towards the scraper 124.

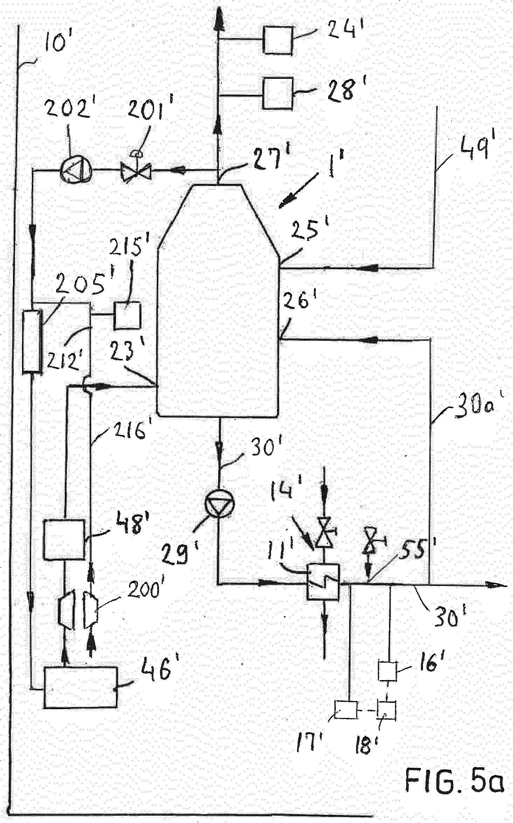

Figures 5a to 5f show the invention in more detail by means of a preferred embodiment. Figures 5a to 5d use the same reference numbers as Figures 1 to 4 to identify like structures.

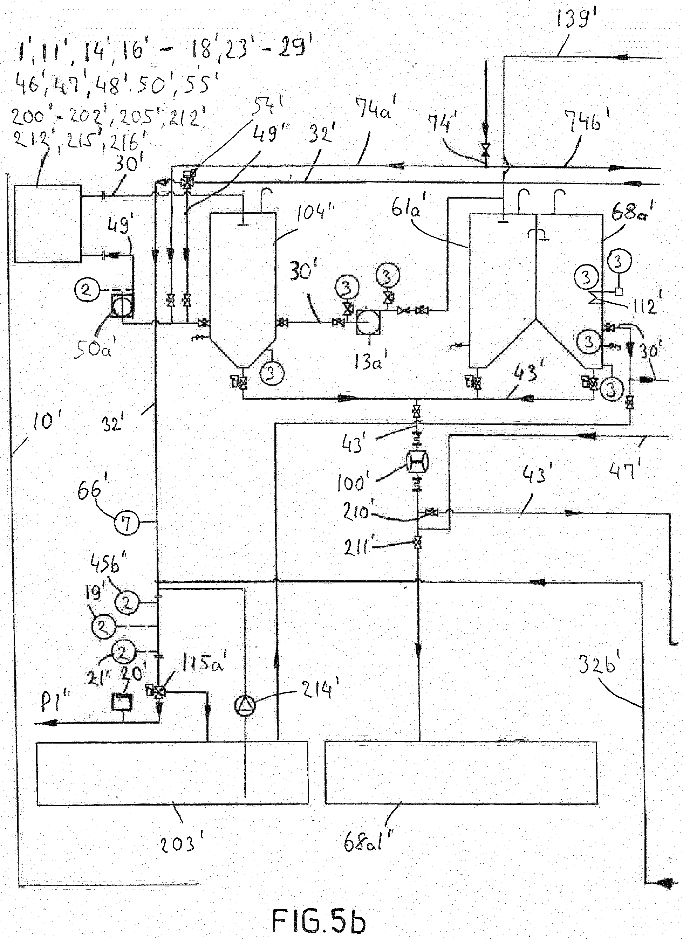

In order to simplify Figure 5b, the components (1', 11' 14' etc.) shown in Figure 1 have in Figure 5b been combined and shown as a single box. In Figure 5a the internal combustion engine 46' is a diesel engine. Intake air for the internal combustion engine 46' is warmed by compression in the turbo charger 200 and is via line 216' led to the internal combustion engine. A base feeding device 215' can be arranged for feeding base to line 216' in order to neutralize the gases fed to the intake of the internal combustion engine 46'. A purification unit connected to the exhaust gas scrubber 1' is shown in Figures 5b to 5d. This purification unit for purifying wash water exiting from the exhaust gas scrubber 1' comprises in addition to the effluent circuit 3' (shown in Fig. 5c) and the purification device 120' (shown in Fig. 5d), process tanks and other components, such as pumps and valves (shown in Figs 5b to 5d)..

Referring to Figure 5a, reference numeral 48' designates an exhaust gas boiler for cooling down the exhaust gases. At the same time as the exhaust gas boiler 48' cools down the exhaust gases, heat energy is recovered from the exhaust gases for the ship's various heating needs. The operation of the exhaust gas boiler 48' is known to one skilled in the art, so the structure and operation of the exhaust gas boiler are not explained in closer detail herein. Because of the exhaust gas boiler 48', the exhaust gases arrive at the exhaust gas scrubber 1' cooled down, whereby their volume and flow rate are smaller than with no exhaust gas boiler and the water demand for purifying the exhaust gases decreases. The exhaust gases from the internal combustion engine 46' are at point 23' led into the Exhaust Gas Recirculation (EGR) scrubber 1'. The exhaust gases are washed in the scrubber 1' and exit therefrom purified at point 27'. Reference numeral 29' shows a pump for emptying dirty wash water from the scrubber 1'. The pump 29' is a centrifugal pump, for instance. The wash water which exits the scrubber 1' is hot and contains impurities. The hot wash water is cooled down before it enters the purification unit 2' shown in Figures 5c and 5d. Reference numeral 14' shows a cooling apparatus arranged upstream the purification unit. The cooling apparatus 14' (in Fig. 5a) comprises a heat exchanger 11'. Cold raw water is supplied to the heat exchanger 11', whereby the temperature of the hot wash water supplied to the heat exchanger drops in the heat exchanger e.g. from a value of about 80°C to a value of 30°C. The raw water is sea water or, alternatively, it may be fresh water (river or lake water). The cooled wash water can be led along a line 30a' back to the exhaust gas scrubber 1'. It is ensured that the pH value of the wash water exiting from the heat exchanger 11' and returning to the exhaust gas scrubber 1' is at least 7. In practice, this is carried out such that a measuring means 17' determines the pH value of the wash water, and if the pH value measured by the measuring means 17' is less than 6, a base is fed to the wash water by feeding means 16' so that a pH value of at least 6.5, preferably 7, is achieved. The base to be used is e.g. lye, i.e. sodium hydroxide (NaOH), or another neutralising substance. Control means 18' control preferably automatically the operation of the feeding means 16'. The feed rate of wash water to the exhaust gas scrubber 1' is in the order of 100 to 1000 m³/h, mostly depending on the engine power of the ship. In small engines in particular, the feed rate may be less than 100 m³/h, for instance 40 to 100 m³/h. The wash water feed rate is typically 20 to 50 m³/MWh. Thus, the water feed rate for a heavy oil operated diesel engine of about 6000 kW power may typically be 120to 300 m³/h, when the wash water feed pressure is 3 to 5 bar. It is possible that the feed pressure is higher than this, in which case the wash water feed rate may be reduced. When necessary, more water is fed to the lines 30' and 30a' leading to the exhaust gas scrubber 1'. Reference number 55' designates a water feeding point to line 30'. The water may be fresh water or salt water. Water purified in the purification unit (shown in Figures 5b to 5d) can be led along a line 49' (outlet line) to the exhaust gas scrubber 1', resulting in internal circulation.

Referring to Figures 5b to 5d, a feed pump 13' (see Fig. 5c) feeds effluent via line 30' and a coarse filter 12' to the effluent circuit 3'. The effluent feed rate is about 0.1 to 5 m³/h. The effluent feed rate can be e.g. about 1.5 m³/h. The magnitude of the feed rate highly depends on the ship's engine power and the sulphur content of the fuel. Preferably, the feed pump 13' is a displacement type pump (positive-displacement pump), and it is arranged to produce a pressure of 0.1 to 5 bar, even up to 10 bar, in the line 30' downstream of the feed pump. The advantage of a displacement pump, which is e.g. of the eccentric screw pump type, is that it is highly resistant to dirt and corrosion and does not much mix the medium it is pumping. The pressure of the effluent in the line 30' upstream the feed pump 13' is 0.1 to 10 bar, e.g. 3 to 5 bar, but may be higher than this. The pore size of the coarse filter 12' is selected such that solid impurity particles larger than 10 µm in size are filtered out; particles smaller than this pass through the filter. Typically, the pore size of the coarse filter 12' is selected such that impurity particles at least 40 µm in size, e.g. at least 50 to 100 µm, are filtered out. Such impurity particles include rust scales, large soot particles, and possible salt crystals. The coarse filter 12' is preferably a wire mesh filter. Reference numeral 12a' designates an optional filter downstream the coarse filter 12'.

The effluent that has undergone the above-described preliminary filtration is led to the effluent circuit 3'. The effluent circuit 3' comprises two series-connected membrane filters 4', 4a' which comprise a semipermeable membrane 7', 7a' serving as a film. The membrane filters 4', 4a' are capable of filtering impurities whose size is less than 0.1 µm. The membrane filters are commonly commercially available filters. Preferably, they are ceramic filters with an elongated frame structure made of a ceramic material and comprising a plurality of borings or channels extending from the inlet end 6', 6a' of the membrane filter 4', 4a' to the discharge end 9', 9a' of the membrane filter. The material of the ceramic frame is e.g. sintered alumina (Al₂O₃), titanium oxide (TiO₂), silicon oxide (SiO₂) or zirconium oxide (ZrO₂). For the sake of simplicity, only two borings are illustrated in the figure in broken line. The diameter of the borings is e.g. 3 to 4 mm, and the length of the membrane filter is e.g. about 1000 mm. The active layers (membranes) of the membrane filters are deposited and sintered on the surface of the borings. The active layers are typically made of TiO₂, ZrO₂, SiO₂ or Al₂O₃. The active layer can be made from another oxide than the ceramic frame which usually is made from Al₂O₃. The active layer is e.g. titanium oxide (TiO₂) if the membrane filter is of the micro filter type, and may be e.g. zirconium oxide (ZrO₂) if the filter is of an ultrafilter type or a nanofilter type. The active layer may also consist of sintered alumina (Al₂O₃) and silicon oxide (SiO₂) or combinations of said oxides. Instead of an oxide layer, it is feasible that an active layer is made of an appropriate silicate or carbide. The material constituting a semipermeable membrane is porous so that it enables selective permeation of water molecules contained in the effluent on condition that the pressure is sufficiently high. The material constituting the semipermeable membrane does not, however, enable permeation of compounds dissolved in the effluent, such as dissolved carbon compounds, hydrocarbon compounds, nitrogen compounds (such as nitrates and nitrites) and sulphur compounds (such as sulphates and sulphites) and extremely small solid impurity particles, so these keep on circulating in the effluent circuit 3'. Depending on the type and pore size of the membrane filter, the membrane filters 4', 4a' may be used for filtering out particles whose size is as small as few nanometres only. A water molecule penetrates the semipermeable membrane of the membrane filter since its size is only about 0.3 nm.

Preferably, an ultrafilter or a nanofilter and, if permeation of very small matter is to be prevented, possibly a reverse osmosis filter, may be used as the membrane filter 4', 4a'. The filtration capacity of a nanofilter is within a range of about 0.0008 to 0.008 µm (molecular weight of about 200 to 15000 being filtered out) while a reverse osmosis filter passes therethrough matter having the size of less than about 0.0011 µm (about 1 nm) whose molecular weight is within a range of 1 to 400. Metal ions can be filtered out by the reverse osmosis filter but nanofilters pass metal ions. The advantage of nanofilters is that they operate at a lower pressure than the reverse osmosis filter. The pore size of the membrane filter 4', 4a' is selected such that it meets the requirements set for water purification. Those skilled in the art are capable of selecting the membrane filter on the basis of their common knowledge or by trial; the selection requires no unreasonable effort. The physical implementation of the membrane filter may vary greatly; it may be in spiral form (comprising several fibre layers), in tubular form, etc. A filter manufactured by Pall Filtersystems GmbH under the trade name SCHUMASIV (type Pall - MF 0050T6021) with a pore size of 0.05 µm may be used as the membrane filter 4', 4a', for instance. A pore size in the interval 0.02 to 0.1 µm is believed to be suitable for most application.

The effluent circulates in the effluent circuit 3' by means of the circulation pump 5'. The effluent circulation rate in the effluent circuit is 50 to 110 m³/h, e.g. 50 to 70 m³/h, depending inter alia on the number of membrane filters 4', 4a' and as far as the operation of the membrane filters is concerned in order to achieve the optimal flow rate (in unit m/s), and the pressure in the effluent circuit 3' is e.g. 2 to 7 bar, and may typically be 3 to 5 bar, but more than 7 bar, e.g. a range of 7 to 100 bar may be feasible. The optimal flow rate may be 4 to 6 m/s, for instance. From outlets 8', 8a' of the membrane filters 4', 4a', through the semipermeable membrane 7', 7a', a filtrate, which is purified effluent, is discharged into line 32'. The rate of flow of purified effluent in the line 32' is 1 m³/h, for instance. The rate of flow highly depends on the engine power of the ship and the efficiency of the purification unit 2', which has to be dimensioned to correspond with the purification demand. The rate of flow in the line 32' may thus vary greatly, e.g. 0.5 to 5 m³/h. From the discharge end 9' of the membrane filter 4' a residue, i.e. effluent containing impurities, exits into the inlet end 6a' of the membrane filter 4a', and from the discharge end 9a' of the membrane filter 4a' a residue, i.e. effluent containing impurities, exits into an inlet end 31' of the circulation pump 5'.

It is feasible that while circulating the effluent, the membrane 7', 7a' is subjected to ultrasounds at a frequency of 30 to 70 kHz, e.g. 50 kHz, and/or to vibration at a frequency of 50 to 1000 Hz in order to improve the separating power (efficiency of purification) of the membrane filter. The membrane can be made to vibrate by placing it in a vibrating fixture or housing (not shown).

The water purified in the effluent circuit 3' may via line 32' be discharged into the sea (at point P1') and/or back to the exhaust gas scrubber 1' via line 49', provided, of course, that the water is sufficiently clean. Typically, a vast majority of the purified effluent is discharged into the sea, but it may also be led back to the exhaust gas scrubber 1'. Preferably, a junction of the lines 32' and 49' is provided with a three-way valve 54' (preferably an automatic three way valve) for adjusting the magnitude of proportion of the purified water to be fed back to the exhaust gas scrubber 1, in which case a proportion not being fed to the exhaust gas scrubber 1' is discharged directly into the sea (at point P1'). Measuring device 45b' determines the PAH concentration in the purified effluent, i.e. in the line 32', and measuring device 45a' determines the PAH concentration in the line 30' prior to the purification unit 2' and the effluent circuit 3'. Preferably, the operation of the effluent circuit 3' and the purification unit 2' is designed and dimensioned such that the PAH concentration of the purified effluent is not more than 50 µg/L above the PAH concentration of the water taken in, whereby said value 50 µg/L relates to a 45 t/MWh effluent rate, where MW refers to driving a internal combustion engine at a power which is 80% of the maximum power of the internal combustion engine. The measuring devices 45a', 45b' are measuring devices based on fluorescence when the effluent rate exceeds 2.5 t/MWh, and measuring devices based on ultraviolet light or the like when the effluent rate is below 2.5 t/MWh. Preferably, the measuring devices should be in accordance with the ISO 7027:1999 standard.

A measuring means 19' is connected to the line 32' for measuring the pH value of the purified effluent exiting from the membrane filters 4', 4a' and the effluent circuit 3' (see Fig. 5b). If the pH value is below a predetermined minimum value e.g. 6.5, a feeding device 20' is used for adding a base, e.g. lye, to the exiting water so that the pH value rises above the predetermined minimum value. Temporarily, in manoeuvring situations, when the load on the internal combustion engine varies, it may be allowable that the pH value of the purified water differs by about two pH units from the pH value of the water taken onboard the ship.

A measuring means 21' is also connected to the line 32' for measuring turbidity of the purified effluent (see Fig. 5b). Preferably, the turbidity must not on average (measured in a time period of more than 15 minutes) be more than 25 FNU above the value of the water taken onboard the ship, where FNU is the unit for turbidity and refers to "Formazin Nephelometric Units". Said turbidity may also be given as a value of 25 NTU, where NTU refers to "Nephelometric Turbidity Units". The turbidity of water may be measured by a device called a nephelometer which comprises a detector for measuring how small particles contained in water scatter light. The detector is set off a light beam. If the water contains a large amount of small particles, more light is reflected into the detector than if the amount of small particles is small. A calibrated nephelometer measures the turbidity of water in NTU. The ISO 7027 standard provides a test method for determining the turbidity of water.

When the effluent is circulated in the effluent circuit 3', solid microscopically small impurities collect in the semipermeable membranes 7', 7a' of the membrane filters 4', 4a'. At the same time, the effluent becomes concentrated with impurities, since the impurities dissolved in water do not collect in the membrane filters 4', 4a' but keep on circulating in the effluent circuit 3'. The effluent circuit 3' is at intervals to be emptied of the effluent concentrated with impurities. The emptying is carried out by line 47' and pump 138'. The concentrated effluent is conveyed to the purification device 120'. The purification device 120' corresponds to the purification device shown in Figures 3, 4.. A precipitating agent as explained in connection with Figure 3 is also used in the embodiment of Figure 5d. The purification unit 120' purifies the concentrated effluent fed thereto such that a waste matter in the form of a mushy compact mass containing a very high amount of impurities and only little water is obtained. The waste matter is conveyed to the waste matter receptacle 68'. As the waste matter is very concentrated and relatively dry, the waste matter receptacle 68' can be small, and it may be taken to the shore to be emptied for further treatment. Such further treatment may be combustion in a hazardous waste treatment plant. Prior to the removal of filtrate, i.e. water, from the purification device 120' its turbidity and pH shall fulfil certain values, c.f devices 19' and 21' for measuring pH and turbidity, respectively.. When necessary, a base is fed by a feeding device to the water so that its pH value is as desired (more than e.g. 6.5, preferably about 7). Diluting the purified water with water can sometimes be an alternative to adding a base to the purified water in order to achieve a desired pH value. If the purity (quality) of the purified water does not fulfil the requirements, the water purified in the purification device 120' may be further purified by means of activated charcoal and a precipitating agent. For this purpose the purified water exiting via the line 32' from the effluent circuit 3' may be led via a line (not shown) to the purification device 120'. If a set turbidity value is exceeded, activated charcoal is mixed with the purified effluent by an activated charcoal feeding device (not shown) and the purified effluent is led back to the purification device 120'. The amount of activated charcoal per each cubic metre of purified water is roughly 1 to 3 kg. The activated charcoal is in the form of granulate. The purification device 120' also makes it possible to reduce polycyclic aromatic hydrocarbons (PAH) contained in the effluent. The filtration of the purification device 120' results in a clear filtrate that may be discharged into the sea (at point P1') or returned to the exhaust gas scrubber 1'. The water which has been purified in the purification device 120' is pumped by a pump 65', preferably a centrifugal pump via line 32b to discharge point P1 a'. Again, before the purified effluent may be discharged into the sea, its pH value and turbidity have to fulfil certain values. Again, when necessary, the pH of the purified water may be adjusted by a base feeding device. The residue is conveyed to the waste matter receptacle 68' having preferably a volume of 500 to 2000 I. When water is clarified by means of the purification device 120', no concentrated effluent is fed from the effluent circuit 3' to the purification device 120', i.e. a valve 210' is closed.

Reference numeral 131' in Figure 5d designates a filter, preferably a 5 to 20 µm filter, e.g. 10 µm filter, which ensures that the water is clean before entering line 32b'. The water can be dark when initiating the exit of the water from the purification device 120'. The filter 131' can be bypassed by the bypass line 116".

In the following, it will be explained how the membranes 7', 7a' of the membrane filters 4', 4a' are cleaned with a chemical cleaning agent in order to clean them of impurities and how the membrane filters are subjected to intermediate washing.

The dirty side of the membrane filters 4', 4a' is emptied of effluent. After emptying of effluent, filling of the membrane filters 4', 4a' is started. The membrane filters 4', 4a' are filled with a mixture of warm fresh water and a chemical cleaning agent. Water and the chemical cleaning agent are mixed to form a wash solution which is stored in a cleaning solution reservoir 72'. The wash solution is introduced from the cleaning solution reservoir 72' to the membrane filters 4', 4a'. The cleaning is started by starting the circulation pump 5'.

In the following, emptying and intermediate washing of the membrane filters are explained.

After the membranes 7', 7a' of the membrane filters 4', 4a' have been cleaned with the chemical cleaning agent as explained above, they are subjected to intermediate washing. The intermediate washing is carried out by emptying the membrane filters 4', 4a' as explained above, after which the membrane filters are filled and washed as explained above with the exception that no cleaning agent is used.

After the aforementioned treatment, the membrane filters 4', 4a' have been cleaned and the process for purifying the effluent coming from the exhaust gas scrubber may continue by starting the feed pump 13' and the circulation pump 5'.

When necessary, the membrane filters 4', 4a' may also be cleaned with an acidic cleaning agent. The cleaning with an acidic cleaning agent is carried out as explained above, but instead of a basic cleaning agent an acidic cleaning agent is used. After the membrane filters 4', 4a' have been cleaned with the acidic cleaning agent, the membrane filters are emptied and subjected to intermediate washing as described above.

Preferably, the purification unit 2', i.e. the combined effluent circuit 3' and the purification device 120', may be a transferrable container-like unit since such a structure is quite easy to connect to old, already existing ships as retrofitting.

By estimation, the purification unit comprising the disclosed band filter collects about 1 to 20 m³ of waste matter highly concentrated with impurities during a two-week use of the ship. Naturally, the amount of waste matter is influenced by the ship's engine power, the sulphur content of the fuel and many other factors.

At intervals, the membrane filters 4', 4a' of the effluent circuit 3' have to be cleaned of effluent and collected impurities since solid microscopically small impurities collect in their semipermeable membranes 7', 7a' when the effluent circulates in the effluent circuit 3'. New effluent is fed from the line 30' to the effluent circuit 3' as purified effluent exits from the line 32', in which case the semipermeable membranes 7', 7a' of the membrane filters 4', 4a' gradually become filled with solid, extremely small impurities, such as soot particles. When impurities collect in the membranes 7', 7a' of the membrane filters 4', 4a', the filtration capacity of the membrane filters decreases. The purification capacity of the membranes 7', 7a' is restored when they are cleaned. The effluent circuit 3' is cleaned when the pressure difference becomes disadvantageously large for carrying out membrane filtration and the impurity concentration of the effluent circulating in the effluent circuit has become high.

When the effluent circuit 3' is cleaned, it is emptied of effluent. The cleaning of the effluent circuit 3' by emptying is carried out by leading purified water from the line 32' via a line 60' to a tank 61' for purified water wherefrom along lines 60' and 42' water is led to the effluent circuit 3', to the "clean side" of the membrane filters 4', 4a'. Alternatively, the effluent circuit 3' may be emptied by using water to be obtained from a source other than the purified water exiting from the effluent circuit. Since water is applied to the "clean side" of the membrane filters 4', 4a', it may be said that the effluent circuit 3' is subjected to washing by a backwashing system. Reference number 62' designates a pump used for increasing the pressure in the line 42' to be higher than the pressure in the line 60'. The pressure in the line 42' is preferably 6 to 12 bar, for instance 8 bar. The line 42', the pump 62', and the tank 61' for purified water together constitute a washing device 22' (being part of the backwashing system). Water led from the line 42' to the "clean side" of the membrane filters 4', 4a' at a relatively high pressure (preferably 6 to 12 bar) removes impurities collected in the membranes 7', 7a' of the membrane filters. When purified water (or another appropriate fluid) is fed by the washing device 22' via the line 42' towards the membranes 7', 7a' in a direction which is opposite to the direction in which the effluent purified of impurities flows through the membranes 7', 7a', the solid impurities collected in the membranes 7', 7a' can be removed and conveyed into the line 43'. Preferably, the water (or another fluid) led towards the membranes 7', 7a' via the line 42' may be supplied as pressure pulses, which enhances the removal of impurities from the membranes 7, 7a'. While the washing device 22' empties the effluent circuit 3' of effluent containing a large amount of dissolved impurities, it simultaneously cleans the membranes 7', 7a' of the membrane filters 4', 4a' of solid impurities. In order to improve the cleaning efficiency, the water may be led to the effluent circuit heated, e.g. to a temperature of 30 to 70°C. The tank for purified water 61' can be provided with a heating device (not shown), e.g. electric resistors, for heating the water. If provided with a heating device, the tank 61' is preferably thermally insulated. The volume of the tank 61' is e.g. 50 to 300 L. A valve 63' is used for controlling the access of water into the back flush water tank 61'. A valve 64' is used for controlling the access of water into the membrane filters 4', 4a'. While cleaning the effluent circuit 3', the circulation pump 5' is stopped. When water is fed by the washing device 22' to the effluent circuit 3' including its membrane filters 4', 4a', the effluent in the membrane filters 4', 4a' and in the lines of the effluent circuit may be led from the discharge end 9' of the membrane filter 4' via a line 56' into the line 43' and, correspondingly, from the inlet end 6a' of the membrane filter 4a' via a line 41' into the line 43' in which the impurities in the effluent are filtered by the purification device 120'. A valve 44' of the line 43' is normally when effluent is circulated in the effluent circuit 3' closed, but the valve 44' is opened when effluent is to be removed from the effluent circuit or when the washing device 22' is to be used for cleaning the effluent circuit and its membrane filters 4', 4a' of the effluent and solid impurities.

Instead of purified water obtained from the line 32', pressurized air or some other appropriate fluid, such as nitrogen, may be used for cleaning the effluent circuit 3'. The volume of the effluent circuit 3' is e.g. 100 to 1000 L, typically 50 to 500 L. The volume depends on the engine power of the ship and the efficiency of the purification unit 2'. For a heavy oil operated diesel engine of about 6000 kW power, for instance, the volume of the effluent circuit is about 60 L.

The described backwashing and the related cleaning of the membrane filters 4', 4a' and emptying of the effluent circuit of effluent are carried out at intervals as necessary when the pressure difference so requires. Backwashing procedures may be carried out e.g. four times per hour. Among other factors, the impurity concentration and feed rate (in unit m³/h) of the effluent flowing in the line 30', the volume of the effluent circuit 3', the efficiency and number of membrane filters 4', 4a', the purity requirement set for the water exiting from the line 32' have an influence on how often backwashing is to be performed. It is feasible that in association with the cleaning of the membranes 7', 7a' they are subjected to ultrasounds at a frequency of 30 to 70 kHz, e.g. 50 kHz, and/or to vibration at a frequency of 50 to 1000 Hz in order to enhance the cleaning thereof.

It is feasible that the effluent circuit 3' is cleaned such that it is not emptied completely. In such a case, only smaller amounts of effluent are removed from the effluent circuit at a time. A need to frequently remove small amounts of effluent arises if the semipermeable membranes 7', 7a' of the membrane filters clog up quickly with extremely small impurities that hinder the operation of the membrane filter. If small amounts of effluent are frequently removed from the effluent circuit 3', the total amount of exiting effluent is larger than if substantially all effluent, highly concentrated with impurities, is removed from the effluent circuit 3' at long intervals. In order to keep the total amount of effluent exiting from the effluent circuit 3' small, the effluent circuit and the semipermeable membranes 7', 7a' are cleaned only when necessary, i.e. when they no longer operate appropriately. If the need to clean the semipermeable membranes 7', 7a' is small, at least a vast majority of the effluent contained in the effluent circuit 3' is removed at long intervals, rather than only in small amounts and at short intervals.

In addition to the above-described cleaning comprising backwashing, it is preferable to clean the effluent circuit 3' with a cleaning agent, which may be a basic cleaning agent. Cleaning with a cleaning agent cleans the effluent circuit 3' more efficiently than a mere backwashing. The cleaning with a cleaning agent is performed much more seldom than the above-described backwashing procedures. In Figure 5c, reference number 72' designates a cleaning solution reservoir connected to the effluent circuit 3'. The volume of the cleaning solution reservoir 72' is e.g. 100 to 500 L. The cleaning solution reservoir 72' is connected to the line 30', in which case a cleaning solution is applied to a "dirty side" of the membrane filters. A need to clean the effluent circuit 3' arises when the pressure in the effluent circuit 3' rises above a certain level. Consequently, the pressure of the effluent circuit 3' is monitored by a measuring device 73'. When the measuring device 73' indicates that the pressure has risen above a certain level, a cleaning solution is fed from the cleaning solution reservoir 72' to the effluent circuit 3'. Alternatively, the effluent circuit 3' may be cleaned at certain determined intervals, in which case no measuring device 73' is necessary. Since those skilled in the art know how to design the necessary feeding arrangements, no arrangement for feeding a cleaning agent to the effluent circuit is explained in closer detail herein. Prior to feeding the cleaning solution to the effluent circuit 3', it is preferable to empty the effluent circuit of effluent.

Many metals contained in the effluent, such as arsenic, cadmium, chrome, copper, lead, nickel, zinc, vanadium, molybdenum and manganese, are detrimental to the environment. The purification unit 2' enables solid compounds containing said metals, i.e. particles, to be removed from the effluent such that the filtrate exiting from the line 32' does not contain them. The metal compounds dissolved in the effluent that are not purified in the membrane filters 4', 4a' may be removed from the purified effluent exiting from the membrane filters by ion exchange. The purified effluent is then led to an ion exchange apparatus, which is illustrated by reference number 66'. The ion exchange apparatus comprises one or more ion exchange pastes or resins to remove dissolved metal ions. Ion exchange occurs when the water being treated passes through the ion exchange paste or resin. Ion exchange pastes or resins suitable for removal of metal cations are highly acidic cation resins and chelating cation resins, for example. The ion exchange paste or resin used may be regenerated or replaced when necessary. The ion exchange apparatus 66 enables matter that cannot be reached by a nanofilter, such as metal ions, nitrates and nitrites, to be purified.

The purification unit 2' is designed to purify nitrates (NO₃⁻) contained in the effluent so that the amount of nitrates does not exceed an amount NO_{X} in exhaust gases associated with a 12% reduction of the amount NO_{X} in the exhaust gases, or does not exceed 60 mg/L when the rate of effluent removal is 45 t/MWh, where the greater one of said conditions is the determining one. Nitrites (NO₂⁻) contained in the effluent are also purified.

Typically, the sulphur compounds contained in the effluent are in sulphate form (SO₄²⁻) so, being harmless, they may be discharged into the sea water and need not be purified. Nevertheless, they may be removed in the purification unit 2'. The effluent also contains a small amount of sulphites (SO₃²⁻).

It is known that the above-described arrangement enables the exhaust gases from a ship's engine to be purified so that the sulphur and nitrogen compounds remain below the given maximum values. The scrubbing of exhaust gases produces wash water whose pH, PAH and composition may be as follows:

| | | |
|---|---|---|
| | pH | 7.1 |
| | PAH | 22 µg/L |
| | water | < 75 wt% |
| | sulphates (SO₄²⁻) | < 25 wt% |
| | nitrates (NO₃⁻) | < 0,2 wt% |
| | nitrites (NO₂⁻) | < 0,2 wt% |
| | metals, in total < 0.0001 wt% (e.g. 65500 µg/L V, 8000 µg/L Ni, | |
| 1100 µg/L Mo, 240 µg/L Zn, 137 µg/L Cr, 130 µg/L Cu, 95 µg/L Mg, 58 µg/L | | |
| AS, 2 µg/L Pb, 1 µg/L Cd, and Hg < 0.2 µg/L) | | |
| hydrocarbons, in total | | < 0.0001 wt% |

The composition depends on the engine's running conditions, the fuel used, and the running conditions of the exhaust gas scrubber (the type, amount and temperature of the water).

A person skilled in the art will appreciate that nitrates can be purified in the purification unit 2' well enough for the aforementioned requirement to be met, according to which the amount of nitrates does not exceed the amount NO_{X} in the exhaust gases associated with a 12% reduction of the NO_{X} amount in the exhaust gases, or does not exceed 60 mg/L when the rate of effluent removal is 45 t/MWh, where the greater one of said conditions is the determining one. Sulphates can also be purified, although they could be discharged into the sea without purification. Nitrites are also purified. The purifying unit 2' onboard a ship ensures that both solid and dissolved metal compounds are purified.

The buffer tank 104" receives dirty water from the scrubber 1'. From the buffer tank 104' dirty water can be fed to a dirty water tank 61 a". The latter is connected to an overflow dirty water tank 68a'. From the overflow dirty tank 68a' water can be fed to the effluent circuit 3' vialine 30'. Alternatively the dirty water can be fed by pump 13a' via line 43' to the purification device 120' or to a sludge tank 68a1'. By opening and closing valves 210', 211' one can decide whether the dirty water is fed to the purification device 120' or to the sludge tank 68a1'. Reference numeral 100' designates a pump, preferably a membrane pump, for feeding the dirty water. The bottom sediment in the dirty water tank 61 a' can be fed to the sludge tank 68a1' or alternatively to the purification device 120'. The dirty water tank 61 a' is communicating with the overflow dirty water tank 68a'.

In summary, it can be stated that the above-described arrangement enables exhaust gases to be purified and wash water to be treated such that even strict requirements and recommendations are met, e.g. those set forth in the IMO resolution MEPC.259(68) ("2015 GUIDELINES FOR EXHAUST GAS CLEANING SYSTEMS") issued in 2015.

It is clear that the arrangement requires some experimenting and adjusting so as to make the operation of the purification device as desired and meet the requirements set.

In the following, a list is presented to explain the meaning of the reference numbers used in Figures 1 to 5d:
1,1' exhaust gas scrubber
2 purification unit
3, 3' effluent circuit
4, 4a, 4', 4a' membrane filter (a filter containing a semipermeable membrane)
5, 5' circulation pump
6, 6' inlet end of the membrane filter 4, 4'
6a, 6a' inlet end of the membrane filter 4, 4a'
7, 7a, 7' 7a' semipermeable membrane
8, 8' outlet of the membrane filter 4, 4'
8a, 8a' outlet of the membrane filter 4a, 4a'
9, 9' discharge end of the membrane filter 4', 4'
9a, 9a' discharge end of the membrane filter 4a, 4a'
10, 10' ship
11' heat exchanger
12' coarse filter
13' feed pump
13a' pump
14' cooling apparatus
16' base feeding means
17' measuring means for determining pH value of effluent exiting from the exhaust gas scrubber 1'
18' control means for controlling the base feeding means 16'
19' measuring means for determining pH value of purified effluent
20' feeding device for feeding a base to purified effluent
21' measuring means for determining turbidity of purified water
22' washing device (backwashing system)
23, 23' exhaust gas entrance point
24' measuring device for measuring CO₂ value of exhaust gases
25, 25', 26' water feeding point
27, 27' discharge point of purified exhaust gases
28, 28' measuring device for determining SO₂ value of exhaust gases
29' pump
30, 30' line (effluent line)
30a' line (effluent line to scrubber)
31', 31' inlet to circulation pump 5', 5'
32, 32', 32b' line
33, 34, 35, 40 return valves
43, 41', 42', 43' line
44' valve
45a', 45b' measuring device for determining PAH concentration
46, 46' diesel engine
47" line for drainage of dirty fluid
48' exhaust gas boiler
49a, 49b, 49' line for purified water (outlet line from purification unit to scrubber 1,1')
50, 50a' pump
54' valve
55' water (e.g. technical water) feeding point
56, 57, 56', 57' line
60' line
61' tank for purified water
61 a' dirty water tank
62' pump
63', 64' valve
65' pump
66' ion exchange apparatus
68, 68' waste matter receptacle
68a' overflow dirty water tank
68a1' sludge tank
69' line for warm fresh water
70 valve
72' cleaning solution reservoir
73' measuring device
74' technical water
74a' line for technical water to scrubber 1'
74b' line for technical water to tank 61' and reservoir 72'
75' vessel for residue to be cleaned in the purification device 120'
100' drainage pump
104' buffer tank
112' heater
115a' three-way valve
116' bypass line
118, 118' roll
119, 119' mixing vessel (precipitation agent is mixed here)
120, 120' purification device
121, 121' band filter
122, 122' filter band
123, 123' underpressure means
124, 124' scraper
125, 125' space
126, 126' spraying device
127, 127' motor-driven mixer
128, 128' vessel
128a' vessel for precipitation agent
129, 129', 129' spreading box
130, 130', 130'float
131' filter
138' drainage pump
139' line for residue from effluent circuit 3' to dirty water tank 61a'
200, 200' turbo charger
201, 201' EGR-valve
202, 202' EGR-blower
203, 203' storage tank for purified water
205, 205' air cooler
210', 211' valves
212' pump
214' pump
215' base feeding device
216' line
P1, P1'.

For the sake of simplicity, the figures do not show all components that according to the knowledge of those skilled in the art are necessary, for instance valves, such as return valves.

The invention has been disclosed above by means of a preferred embodiment only, and therefore it is to be noted that the details of the invention may be implemented in many different ways within the scope of the accompanying independent claims. Thus, for instance, from exhaust gas flow can be cleaned only part of it, or alternatively full flow. Further, the filter band of the purification device (120, 120') does not have to be an endless filter band but it is feasible that it is a disposable filter band, in which case unused filter band is transferred from a feed roller to a receiving roller receiving used filter band containing impurities when the filter band is moving while carrying out the filtration. The disposable filter band is made of fibre mat which is from below supported by a perforated metal plate. When the fibre mat is moving, it is arranged to slide on the metal plate, which is stationary. It is presumable that the pore size of the disposable fibre mat may in practice be smaller than the pore size of an endless steel band mesh. The size of the openings of the fibre mat is 30 to 60 µm, but may be as small as 20 to 30 µm, or even within a range of 10 to 20 µm. Naturally, the pore size of the fibre mat may be more than 60 µm. The disposable fibre mat is cleaned by a scraper, as is an endless filter band as well. The most appropriate pore size for a particular purpose is found by experimenting. A great advantage of an endless filter band over a disposable filter band is that the filter band does not have to be replaced. It is not necessary to subject the filter band (122, 122') of the purification device to underpressure, but underpressure makes the operation of the purification device quicker and, owing to underpressure, the precipitate to be removed from the filter band is quite solid and thus takes only little space in the waste matter receptacle (68, 68'). In embodiments of the invention that are provided with an effluent circuit, the number of membrane filters containing a semipermeable membrane may vary. It is also feasible that the membrane filters are connected in parallel, as distinct from being connected in series as shown in the figure. Preferably, a plurality of effluent circuits and membrane filters may be provided, the effluent circuits being grouped such that at least one effluent circuit and/or at least one membrane filter therein is in use when at least one other effluent circuit and/or at least one membrane filter therein is being cleaned of effluent and/or impurities. This enables the purification unit to operate uninterruptedly while being cleaned. Instead of a feed pump (13') it is at least in principle feasible that the wash water to be purified is fed to the purification device (120, 120') or to the effluent circuit by means of gravity. Prior to being led to the effluent circuit, the effluent may be filtered by means of one or more filters (cf. filter 12').

## Claims

1. A combination of a ship internal combustion engine (46, 46') and a cleaning system for treating impurities contained in exhaust gases of the ship internal combustion engine in order to reduce especially sulphur oxide and nitrogen oxide emissions from the exhaust gases of the internal combustion engine, the internal combustion engine (46, 46') being provided with a turbo charger (200, 200') and the cleaning system comprising
- an Exhaust Gas Recirculation (EGR) scrubber (1, 1') for receiving exhaust gases from the internal combustion engine (46, 46') and for washing the exhaust gases, and
- a purification unit (2) for cleaning wash water to be purified, i.e. effluent, which originates from the Exhaust Gas Recirculation scrubber (1, 1'),
**characterized in that** the purification unit (2) comprises
- an effluent circuit (3, 3') for cleaning the wash water to be purified, i.e. the effluent, originating from the Exhaust Gas Recirculation scrubber (1, 1'), the effluent circuit including at least one membrane filter (4, 4') comprising a semipermeable membrane (7, 7') and a circulation pump (5, 5') for circulating the effluent to be purified in the effluent circuit by feeding the effluent to an inlet end (6, 6") of the membrane filter (4, 4") such that the effluent flowing through the membrane filter filters through the semipermeable member (7, 7') and exits, purified, from an outlet (8, 8') of the membrane filter and the effluent circuit (3, 3') while a residue containing impurities is led from a discharge end (9, 9') of the membrane filter back to the circulation pump (5, 5') and from the circulation pump again to the inlet end (6, 6') of the membrane filter for concentrating the residue; and
- a purification device (120, 120') comprising a band filter (121, 121') comprising a movable filter band (122, 122') for further concentrating the residue originating from the effluent circuit (3, 3'), the purification device being positioned downstream the effluent circuit and the discharge end (9, 9') of the membrane filter (4, 4').

2. A combination as claimed in claim 1, **characterized in that** the internal combustion engine (46, 46') is a diesel engine having a turbo charger (200, 200').

3. A combination as claimed in claim 1, **characterized in that** it comprises means (129, 129") for feeding one or more precipitating agents to the purification device (120, 120").

4. A combination as claimed in claim 1, **characterized in that** the filter band (122, 122') is a disposable filter band which is arranged to be transported from a feed roller to a receiving roller for receiving used filter band containing impurities.

5. A combination as claimed in claim 4, **characterized in that** the disposable filter band is made of fibre mat which is from below supported by a perforated metal plate.

6. A combination as claimed in claim 1, **characterized in that** the filter band (120, 120') is an endless filter band.

7. A combination as claimed in claim 6, **characterized in that** the endless filter band (120, 120') comprises a wire mesh band.

8. A combination as claimed in any one of the preceding claims, **characterized in that** it comprises underpressure means (123, 123') for producing underpressure on a clean side of the filter band (122, 122').

9. A combination as claimed in any one of the preceding claims, **characterized in that** a scraper (124, 124') is provided in connection with the band filter (121, 121') for removing the filtrate by scraping from a first surface of the filter band (122, 122') in order to clean the filter band.

10. A combination as claimed in any one of the preceding claims, **characterized in that** the purification unit (2') comprises a coarse filter (12') arranged upstream of the effluent circuit (3')

11. A combination as claimed in any one of the preceding claims, **characterized in that** it comprises a backwashing system (22') for cleaning the semipermeable membrane (7, 7') of the membrane filter (4, 4') of impurity particles, the backwashing system being arranged to feed a fluid free of impurities in a flow direction of the semipermeable membrane (7, 7') of the membrane filter, which is opposite to the flow direction of the purified effluent.

12. A combination as claimed in any one of the preceding claims, **characterized in that** it comprises a line (49, 49a, 49b, 49') for feeding the purified wash water back to the exhaust gas scrubber (1, 1').
